(19) Europäisches Patentamt
European Patent Office
Office européen des brevets

(11) **EP 2 983 310 B1**

(12) **EUROPEAN PATENT SPECIFICATION**

(45) Date of publication and mention
of the grant of the patent:
**10.10.2018 Bulletin 2018/41**

(51) Int Cl.:
*H04B 10/071* (2013.01)     *H04B 10/077* (2013.01)

(21) Application number: **14306239.6**

(22) Date of filing: **05.08.2014**

(54) **Device and method for use in optical time domain reflectometry measurements**

Vorrichtung und Verfahren zur Verwendung bei optischen Zeitbereichsreflektometriemessungen

Dispositif et procédé à utiliser dans des mesures de réflectométrie de domaine temporel optique

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**10.02.2016 Bulletin 2016/06**

(73) Proprietor: **Alcatel Lucent
91620 Nozay (FR)**

(72) Inventors:
• **Meersman, Stijn
2018 Antwerpen (BE)**
• **Dupuis, Nicolas
6041 Gosselies (BE)**

(74) Representative: **Nokia EPO representatives
Nokia Technologies Oy
Karaportti 3
02610 Espoo (FI)**

(56) References cited:
**EP-A1- 1 884 758     WO-A1-2005/104315
US-B1- 8 417 114**

**Description**

<u>Field of Invention</u>

Embodiments of the invention relate to the field of optical time domain reflectometry, and in particular to optical data transmission devices and methods for use in optical domain reflectometry measurements in an optical access network.

<u>Background</u>

In the recent years, the demand for high-bandwidth services provided over access networks such as IP television (IPTV) and Video-On-Demand has increased. Moreover, network operators have started to introduce Triple-Play services (internet access, television and Voice Over IP telephony) to the market. As a consequence, both the maximum bit rate as well as the availability provided to the subscribers of the network must be increased. In order to monitor or even to improve the quality of service offered by the access network, several tests may be performed on the access network. In particular when applying an optical access network like a Passive Optical Network (PON), an Optical Time Domain Reflectometer (OTDR) may be used in order to check optical transmission lines and to diagnose defects in the line. The OTDR may also be used to locate the defect.

OTDRs are used to maintain and troubleshoot optical fiber networks, such as PONs. OTDRs are usually placed in the Central Office to monitor the network. They deliver traces which show the reflections and attenuation present along the optical fiber network to which it is connected. Nowadays OTDRs are large and bulky. They use a separate laser to send out pulses and then deduce from the back reflections the characteristics of the optical fiber network. The light of the OTDR laser is merged on the same fiber as the light of the data laser through a Wavelength Division Multiplexer (WDM). To save costs, one OTDR can be connected to multiple PONs through a switch. Since this kind of OTDR is externally connected, it is also called "external OTDR".

Further there exists an OTDR functionality which is embedded within the data traffic functionality and therefore it is called "embedded OTDR". Embedded OTDR hardware is incorporated into a Small Form-factor Pluggable (SFP), where also the data traffic transceiver resides.

Operators have expressed interest in the ability to measure link loss. The link loss is measured between the PON port and any test point in the network. The link loss is of interest during rollout of the PON: it functions as a figure of merit for the installation up to the tested point. If the link loss is above an expected value the installation will not be validated and the field technician/subcontractor will verify the installation before proceeding. Note that both a link loss for the downstream wavelength as well as for the upstream wavelength may be useful. A method on how to measure the link loss on the downstream wavelength and obtain an estimate for the link loss on the upstream wavelength is described in European patent application, in the name of the Applicant, with application number [13306242.2].

EP 1 884 758 A1 discloses a method for calibration of an OTDR measurement equipment without an interruption of data traffic. The method comprises modulating a data signal carrying a payload by a sine wave signal on top of the payload data of the data signal, wherein thus a modulated optical output signal is generated. While sweeping the sine wave signal within a defined frequency range, the modulation amplitude of the modulated optical output signal is monitored. The amplitude of the sine wave signal is then controlled in dependence of the modulation amplitude of the modulated optical output signal such that the modulation amplitude matches a predefined value distribution over the entire frequency range.

US 8 417 114 B1 discloses a method for monitoring optical communications between a managed location and a remote location. The method comprises transmitting an optical signal over an optical fibre and passing it through a test device. A portion of the optical signal is then filtered from the original optical signal and passed through a monitoring unit, which may instruct one ore more switches in the test device to loop the optical signal back toward the managed location.

WO 2005/104315 A1 discloses a method for controlling light emitting devices to compensate for performance degradations due to temperature changes and aging without disrupting the transmission of information. The method comprises injecting a synthesized test signal into the normal data stream. The magnitude of the test signal is sufficiently small that it is buried in system noise and will not alter the noise margin of the transmitted data. By means of micro-detection, recovery and digital signal processing of the embedded test signal, precisely monitored output power and modulation amplitude measurements are carried out, which can be used to adjust performance characteristics regardless of temperature.

<u>Summary</u>

The object of embodiments of the invention is to improve the accuracy of an OTDR link loss measurement, especially when the embedded OTDR is applied. This will allow the operator to make more meaningful conclusions on the outcome of the OTDR link loss measurement and have a better view on the health of the connected fiber network.

According to an embodiment of the present invention, there is provided an optical data transmission device for use in optical time domain reflectometry measurements in an optical access network. The device comprises a test sequence generating unit, configured for generating a test sequence that is to be transmitted in the optical access network, together with a data sequence, and a laser unit configured for generating an optical transmission signal comprising the data sequence and optionally the test sequence. The optical data transmission device further comprises a monitoring unit configured for monitoring a transmit power of the laser unit, and an estimating unit configured for estimating from the transmit power of the laser unit, a transmit power corresponding to the test sequence.

In embedded optical time domain reflectometry (OTDR) measurements, a test sequence or OTDR signal is transmitted on an optical line within an optical access network. This test sequence signal is then reflected, and this reflection is measured to determine the quality or link loss of the optical line. However, to accurately estimate a link loss from the reflected power of the test sequence, it is important to know what the actual transmit power of the test sequence signal was. If the initial power of the test sequence is not known, no quantitative deductions can be made from the measured reflected power.

In current link loss measurements, limitations occur mainly due to changes in transmit power of the laser unit, caused for example by temperature changes and/or ageing. Indeed, a change of transmit power of the test sequence has a direct effect on the back reflected power of the test sequence signal, which influences the link loss measurement. To get a more accurate measurement, the test sequence transmit power has to be estimated. Moreover, since the test sequence is comprised in one optical signal, together with the data sequence, the transmit power which only corresponds to the test sequence cannot be obtained in a straightforward manner.

Embodiments of the invention are based *inter alia* on the insight that parameters/measurements, such as the transmit power of the laser unit, which is monitored by the monitoring unit, can be used for estimating the transmit power corresponding to the test sequence, resulting in an improved accuracy of link loss measurements.

According to an embodiment, the monitoring unit is further configured for monitoring the transmit power of the laser unit in a first mode, wherein the test sequence is comprised in the optical transmission signal, and in a second mode, wherein the test sequence is not comprised in the optical transmission signal. The estimating unit is further configured for estimating the laser unit transmit power corresponding to the test sequence, based on the monitored transmit power of the laser unit in the first mode and the second mode.

Since the test sequence signal uses the same wavelength as the data sequence signal, it is not possible for a power meter to distinguish between the test sequence transmit power and data sequence transmit power based on wavelength. The signals have a different frequency, but it is too expensive to introduce an accurate frequency discriminating power meter. As such, the test sequence transmit power cannot be directly measured separately, unless the data sequence signal is turned off, but this is not feasible. By using the above mentioned set-up, the test sequence transmit power can be estimated by monitoring the transmit power of the laser unit in the two mentioned modes, without turning off the data sequence signal, and without introducing expensive equipment.

According to a further embodiment, the estimating unit is configured for estimating the transmit power corresponding to the test sequence, based on following formula: $Tx_{Tot,TS\ On} - Tx_{Tot,TS\ Off} = \frac{Tx_{TS}}{2}$, wherein $Tx_{Tot,\ TS\ On}$ is the laser unit transmit power in the first mode, $Tx_{Tot,\ TS,\ Off}$ is the laser unit transmit power in the second mode and $Tx_{TS}$ is the laser unit transmit power, corresponding to the test sequence. In a possible embodiment the estimating unit is configured for remotely performing its estimating actions.

According to an embodiment, the optical data transmission device further comprises an obtaining unit, configured for obtaining a test sequence modulation current and a data sequence modulation current. Additionally, the estimating unit is further configured for estimating the laser unit transmit power corresponding to the test sequence, based om said obtained test sequence modulation current and said obtained data sequence modulation current.

An obtaining unit can easily be incorporated into an existing device according to the embodiment in the form of a current measuring unit, which could for example be a Small Form-factor Pluggable (SFP), since it does not need a lot of space. Therefore, this set-up is preferential to alternative testing set-ups, where test equipment, including a laser source with accurate transmit power and an accurate power meter, should be inserted at both sides of the fiber during rollout. This is very cumbersome, since two test apparatuses need to be inserted into the network. Moreover, this kind of equipment is expensive.

In another embodiment, the obtaining unit is configured for looking-up the data modulation current in a look-up table, in function of temperature, which is provided by the manufacturer after calibration of the device. Data modulation current and test sequence modulation current can also be obtained remotely.

According to a further embodiment, the estimating unit is configured for estimating the laser unit transmit power corresponding to the test sequence, based on following formula:

$(I_{mod, TS}/I_{mod, DS}) \cdot Tx_{Tot, TS, Off} \approx Tx_{TS} / 2$, wherein $I_{mod, TS}$ is the test sequence modulation current, $I_{mod, DS}$ is the data sequence modulation current, $Tx_{Tot, TS, Off}$ is the laser unit transmit power in the second mode and $Tx_{TS}$ is the laser unit transmit power, corresponding to the test sequence.

According to an embodiment, the optical data transmission device further comprises a controlling unit, configured for controlling the test sequence modulation current in order to keep a ratio, between the test sequence modulation current and the data sequence modulation current of the data signal, within a predetermined range.

Except for estimating the transmit power corresponding to the test sequence, keeping this transmit power constant can be helpful as well to compensate for changes in the transmit power of the laser unit over time, due to temperature changes and/or ageing. From the above described formula, it is clear that the test sequence transmit power can be kept constant, by keeping the ratio between the test sequence (or OTDR) modulation current and data sequence modulation current constant, which is done by adapting the test sequence modulation current. In a further embodiment the controlling unit performs its tasks remotely.

According to an embodiment, the optical data transmission device further comprises a compensating unit, configured for compensating an optical time domain reflectometry measurement, based on the ratio between the test sequence modulation current and the data sequence modulation current of the data signal.

According to an embodiment, the compensating unit is further configured for compensating an optical time domain reflectometry measurement, based on the estimated transmit power corresponding to the test sequence.

According to an embodiment, the monitoring unit is further configured for monitoring a temperature within the device, and determining, based on the monitored temperature, when a compensation should be carried out.

According to a further aspect of the invention, there is provided a method for performing an optical data transmission, for use in optical time domain reflectometry measurements in an optical access network. The method comprises generating a test sequence that is to be transmitted, in the optical access network, together with a data sequence, and generating an optical transmission signal comprising the data sequence and optionally the test sequence. The method is characterized in that it further comprises monitoring a transmit power of the optical transmission signal, and estimating from the transmit power of the optical transmission signal, a transmit power corresponding to the test sequence.

According to an embodiment, the method further comprises monitoring the transmit power of the optical transmission signal, in a first mode, wherein the test sequence is comprised in the optical transmission signal, and, in a second mode, wherein no test sequence is comprised in the optical transmission signal. The method further comprises estimating the transmit power of the optical transmission signal corresponding to the test sequence, based on said monitored transmit power of the optical transmission signal in the first mode and the second mode.

According to a further embodiment, the method further comprises estimating the transmit power corresponding to the test sequence, based on following formula: $Tx_{Tot, TS On} - Tx_{Tot, TS, Off} = Tx_{TS} / 2$, wherein $Tx_{Tot, TS On}$ is the laser unit transmit power in the first mode, $Tx_{Tot, TS, Off}$ is the laser unit transmit power in the second mode and $Tx_{TS}$ is the laser unit transmit power, corresponding to the test sequence.

According to an embodiment, the method further comprises obtaining a test sequence modulation current and a data sequence modulation current. Additionally, estimating the transmit power of the optical transmission signal corresponding to the test sequence, is based om said obtained test sequence modulation current and said obtained data sequence modulation current.

According to a further embodiment, the method further comprises estimating the transmit power corresponding to the test sequence, based on following formula: $\dfrac{I_{mod,TS}}{I_{mod,DS}} \cdot Tx_{Tot,TS\,Off} \approx \dfrac{Tx_{TS}}{2}$, wherein $I_{mod, TS}$ is the test sequence modulation current, $I_{mod, DS}$ is the data sequence modulation current, $Tx_{Tot, TS, Off}$ is the laser unit transmit power in the second mode and $Tx_{TS}$ is the laser unit transmit power, corresponding to the test sequence.

According to an embodiment, the method further comprises controlling the test sequence modulation current in order to keep a ratio, between the test sequence modulation current and the data sequence modulation current of the data signal, within a predetermined range.

According to an embodiment, the method further comprises compensating an optical time domain reflectometry measurement, based on the ratio between the test sequence modulation current and the data sequence modulation current of the data signal.

According to an embodiment, the method further comprises compensating an optical time domain reflectometry measurement, based on the estimated transmit power corresponding to the test sequence.

According to an embodiment, the method further comprises monitoring a temperature while generating the optical transmission signal, and determining, based on the monitored temperature, when a compensation should be carried out.

According to a further aspect of the invention, there is provided a computer program comprising computer-executable instructions to perform the method, when the program is run on a computer, according to any one of the steps of any one of the embodiments disclosed above.

A person of skill in the art would readily recognize that the proposed devices can be placed at either side of an optical line within an optical access network and that the proposed methods can be applied both in a downstream and/or upstream direction within an optical access network.

Brief description of the figures

The accompanying drawings are used to illustrate presently preferred non-limiting exemplary embodiments of systems of the present invention. The above and other advantages of the features and objects of the invention will become more apparent and the invention will be better understood from the following detailed description when read in conjunction with the accompanying drawings, in which:

Figure 1 is a schematic drawing of an exemplary embodiment of an optical data transmission devices for use in optical domain reflectometry measurements in an optical access network;
Figure 2 is a flowchart illustrating an embodiment of an exemplary method for use in optical domain reflectometry measurements in an optical access network;
Figure 3 schematically shows the relationship between transmit power (Tx) and current for a laser for;
Figure 4 is a flowchart containing compensation methods for a varying $Tx_{TS}$ according to embodiments of the invention; and
Figure 5 shows results of OTDR measurements over a wide temperature range, without compensation (A) and with compensation (B).

Description of embodiments

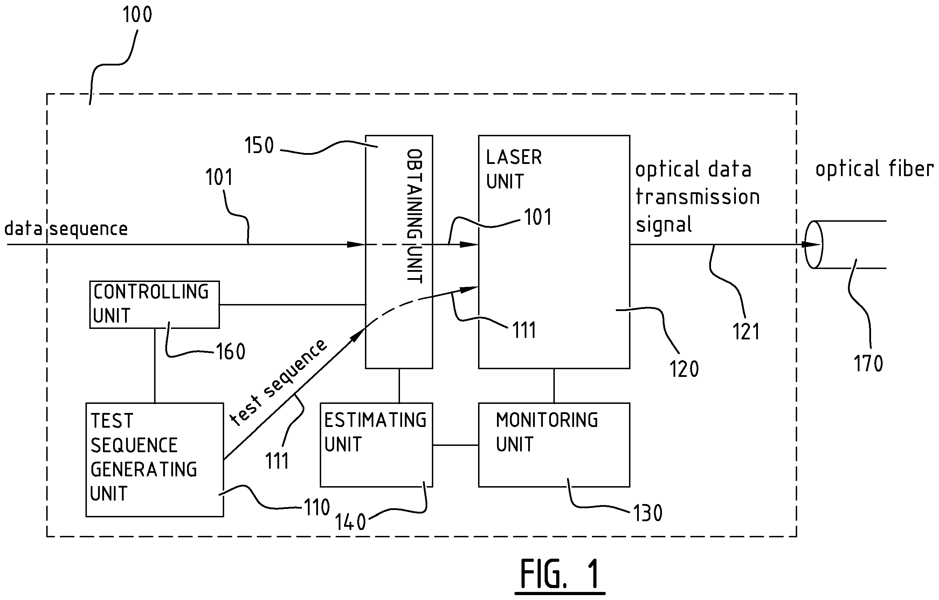

Figure 1 illustrates an optical data transmission device 100 for use in optical time domain reflectometry measurements in an optical access network. The device comprises a test sequence generating unit 110, configured for generating a test sequence 111 that is to be transmitted in the optical access network, together with a data sequence 101. The device further comprises a laser unit 120 configured for generating an optical transmission signal 121 comprising the data sequence 101 and optionally the test sequence 111. If the test sequence is comprised in the optical signal, both the test sequence 111 and the data sequence 101 are to be sent within the same transmission signal 121, by one laser 120. This results in both sequences being sent over an optical transmission line 170 by the laser unit 120, on one and the same wavelength. Therefore, measuring the transmit power, that corresponds with the test sequence only, is impossible for a power meter. However, the test sequence and data sequence do have a different frequency, which would allow to discriminate between the corresponding transmit powers. Nevertheless, introducing an accurate frequency discriminating power meter is very expensive, and is therefore not a preferred approach. The optical data transmission device 100 is characterized in that it further comprises a monitoring unit 130 configured for monitoring a transmit power of the laser unit 120, and an estimating unit 140 configured for estimating from the transmit power of the laser unit 120, a transmit power corresponding to the test sequence. By simply monitoring the total transmit power of the laser unit, when generating an optical transmission signal, the estimating unit 140 is able to estimate therefrom the transmit power corresponding to the test sequence, or in other words, the OTDR transmit power. This OTDR transmit power is a very important parameter in embedded OTDR measurements, using a reflector, since this transmit power influences the power which is reflected back. This has a direct impact on the reflection of the reflector in the OTDR trace, which then has a direct effect on the link loss measurement based on the reflection height. The accuracy of the measurement of the OTDR transmit power, has a significant impact on the accuracy of the link loss measurement.
One way of estimating the OTDR transmit power could be to use the built-in power measurements available in the Optical Network Terminal (ONT) and Optical Line Termination (OLT). The link loss could then be calculated as "Tx power @ OLT - Rx power @ ONT" for the downstream wavelength and as "Tx power @ ONT - Rx power @ OLT". However the accuracy of these measurements is very low and the resulting accuracy is not acceptable for operators. The optical data transmission device of the present invention delivers a more accurate estimate of the OTDR transmit power and can for example be incorporated in an SFP. This allows for a simple set-up of the device in the optical network, as opposed to other approaches which use expensive equipment that needs to be set up at both ends of an optical transmission line.

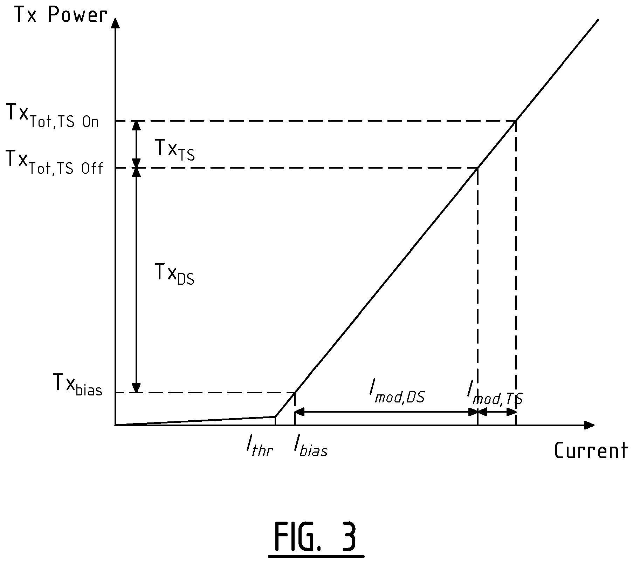

In an embodiment, the monitoring unit 130 can be further configured for monitoring the transmit power of the laser unit 120 in a first mode wherein the test sequence 111 is comprised in the optical transmission signal 121, and in a second mode wherein the test sequence 111 is not comprised in the optical transmission signal 121. In the description of figure 3, there will be further elaborated on the transmit power of the laser unit 120, and the contents of the optical data transmission signal 121 in the different modes. The estimating unit 140 can be configured further for estimating the laser unit transmit power corresponding to the test sequence, hence the OTDR transmit power, based on said monitored transmit power of the laser unit 120 in the first mode and the second mode.

In a possible embodiment of the invention, the device further comprises an obtaining unit 150, configured for obtaining a test sequence modulation current and a data sequence modulation current. Additionally, the estimating unit 140 is further configured for estimating the laser unit 120 transmit power corresponding to the test sequence 111, based on said obtained test sequence modulation current and said obtained data sequence modulation current.

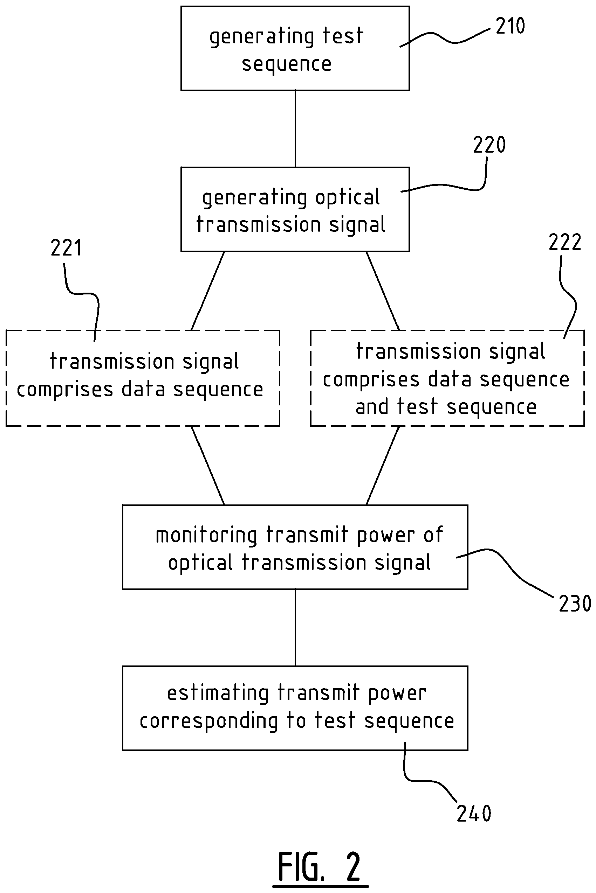

The flowchart of figure 2 illustrates an exemplary embodiment of a method for performing an optical data transmission, for use in optical time domain reflectometry measurements in an optical access network. The method comprises a step 210 of generating a test sequence that is to be transmitted in the optical access network, together with a data sequence, followed by a step 220 of generating an optical transmission signal comprising the data sequence as in step 221, and optionally the test sequence as in step 222. The method is characterized in that it further comprises a following step 230 of monitoring a transmit power of the optical transmission signal, and a final step 240 of estimating from the transmit power of the optical transmission signal, a transmit power corresponding to the test sequence.

According to an embodiment, the method further comprises monitoring the transmit power of the optical transmission signal in step 230, in a first mode, wherein the test sequence is comprised in the optical transmission signal as in step 222, and, in a second mode, wherein no test sequence is comprised in the optical transmission signal as in step 221. Estimating the transmit power of the optical transmission signal corresponding to the test sequence in step 240 is then carried out based om said monitored transmit power of the optical transmission signal in the first mode, see step 222 and the second mode, see step 221.

According to an embodiment, the method further comprises obtaining a test sequence modulation current and a data sequence modulation current. Additionally, estimating the transmit power of the optical transmission signal corresponding to the test sequence, is based om said obtained test sequence modulation current and said obtained data sequence modulation current.

According to an embodiment, the method further comprises controlling the test sequence modulation current in order to keep a ratio, between the test sequence modulation current and the data sequence modulation current of the data signal, within a predetermined range.

As described above, the transmit power corresponding to the test sequence is estimated. Therefore, the total transmit power of the optical data transmission signal, which can comprise both the data sequence and the test sequence, is retrieved from the monitoring unit. For example an SFP can be used for monitoring these transmit powers. Moreover, a current embedded OTDR SFP switches between time periods where the OTDR transmit power is on and off. This is to generate a small temperature drift to eventually get an OTDR trace of higher quality, as described in earlier work (EP2670068). The OTDR transmit power, can then be calculated if the SFP transmit power is retrieved during both an OTDR on and OTDR off period.

To illustrate this, figure 3 shows the current-transmit power relation for a laser. Lasing activity only starts if the current is larger than a threshold current $I_{th}$. To prevent the transition time between lasing and non-lasing activity, a bias current $I_{bias}$ is applied with corresponding transmit power $Tx_{bias}$. Above threshold, the power and current have a linear relationship identified by the slope efficiency G. The data signal is then applied by simply adding a modulation current $I_{mod,DS}$ on top of this $I_{bias}$ when a "1" needs to be transmitted, and no current when a "0" needs to be transmitted. With the modulation current $I_{mod,DS}$ corresponds a power increase of $Tx_{DS}$. The test sequence signal can be a Pseudo Random Binary Sequence (PRBS) signal and can be applied in a similar way as the data sequence signal with its own modulation current $I_{mod,TS}$ and corresponding increase of power, typically with a slower frequency (larger time period). The Tx power in the SFP is monitored with a "slow" photodiode such that it monitors the average data and OTDR transmit power. Since the photodiode monitoring time is many times longer than the OTDR and data signal period, it is safe to say that it monitors half of the data and OTDR transmit power.

Consequently, the transmit power corresponding to the test sequence (OTDR signal), can be estimated via following formula :

$$Tx_{Tot,TS\,On} - Tx_{Tot,TS\,Off} = \left(\frac{Tx_{DS}}{2} + \frac{Tx_{TS}}{2} + Tx_{bias}\right) - \left(\frac{Tx_{DS}}{2} + Tx_{bias}\right) = \frac{Tx_{TS}}{2} \qquad (1)$$

Additionally, the formula for the accuracy of this estimation for $Tx_{TS}$ is given by:

$$\sigma_{Tx_{TS}}^2 = 4\sigma_{Tx_{Tot,TS\,On}}^2 + 4\sigma_{Tx_{Tot,TS\,Off}}^2 = 8\sigma_{Tx_{Tot}}^2$$

In an embodiment of the invention, the estimating unit 140 is configured for estimating the transmit power corresponding to the test sequence, based on formula (1), wherein $Tx_{Tot,\,TS\,On}$ is the laser unit transmit power in the first mode, $Tx_{Tot,\,TS,\,Off}$ is the laser unit transmit power in the second mode and $Tx_{TS}$ is the laser unit transmit power, corresponding to the test sequence.

Alternatively, the OTDR transmit power can be estimated based on the ratio between the OTDR modulation current and data modulation current, multiplied with the total transmit power when OTDR is off, i.e. when no test sequence is comprised in the transmission signal. Estimation of the transmit power, corresponding to the test sequence, can be achieved by using the following formula:

$$\frac{I_{mod,TS}}{I_{mod,DS}} Tx_{Tot,TS\,Off} = \frac{I_{mod,TS}}{I_{mod,DS}} \left[\frac{G.I_{mod,DS}}{2} + Tx_{bias}\right]$$

$$= \frac{Tx_{TS}}{2} + \frac{I_{mod,TS}}{I_{mod,DS}} Tx_{bias}$$

$$\approx \frac{Tx_{TS}}{2} \qquad\qquad (2)$$

The last approximation is carried trough, as the OTDR modulation current is assumed small compared to the data modulation current, and $Tx_{bias}$ is comparable to $Tx_{TS}$ or smaller in embedded OTDR. The neglected term could be kept in the calculations, but then the calculations would become a bit more extensive. Additionally, the formula for the accuracy of this estimation is given by:

$$\frac{\sigma_{Tx_{TS}}^2}{4Tx_{TS}^{\,2}} = \frac{\sigma_{I_{mod}}^2}{I_{mod,TS}^{\,2}} + \frac{\sigma_{I_{mod}}^2}{I_{mod,DS}^{\,2}} + \frac{\sigma_{Tx_{Tot}}^2}{Tx_{Tot,TS\,On}^{\,2}}$$

In a possible embodiment, the estimating unit 140 is configured for estimating the laser unit transmit power corresponding to the test sequence, based on formula (2), wherein $I_{mod,\,TS}$ is the test sequence modulation current, $I_{mod,\,DS}$ is the data sequence modulation current, $Tx_{Tot,\,TS,\,Off}$ is the laser unit transmit power in the second mode and $Tx_{TS}$ is the laser unit transmit power, corresponding to the test sequence.

In an embodiment, the optical data transmission device further comprises a controlling unit 160, configured for controlling the test sequence modulation current in order to keep a ratio, between the test sequence modulation current and the data sequence modulation current of the data signal, within a predetermined range. When the OTDR modulation current can be adapted, it can be adapted in such a way to keep the ratio between the OTDR modulation current and data modulation current constant, or at least within a predefined range. The data modulation current is calibrated during fabrication (over different temperatures) to have a stable and fixed $Tx_{DS}$. Thus by keeping the ratio between both modulation currents constant, a stable $Tx_{TS}$ can be achieved.

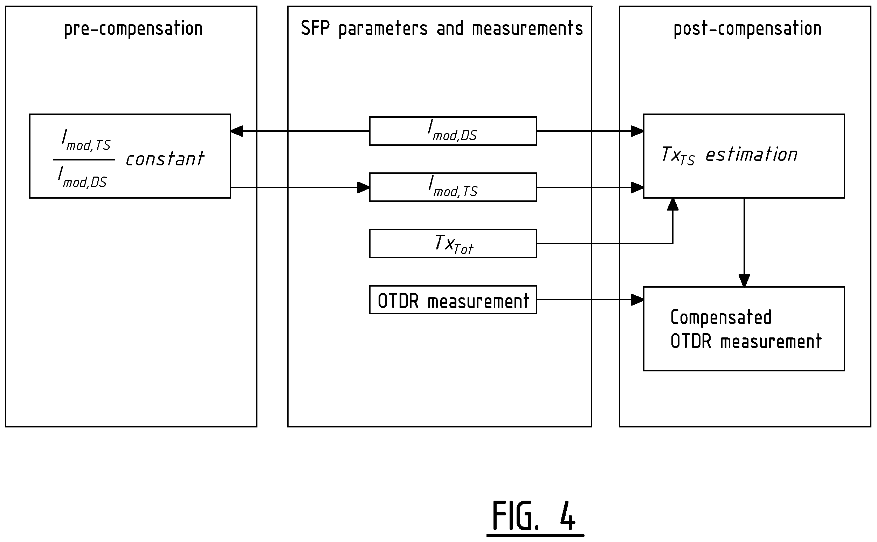

These numerous options to improve the accuracy of the link loss measurement are summarized in the flowchart of figure 4.

According to an embodiment, the method further comprises compensating an optical time domain reflectometry measurement, based on the ratio between the test sequence modulation current and the data sequence modulation current of the data signal. As a pre-compensation step, the OTDR modulation current can be adapted to keep the ratio between OTDR and data modulation current constant, in order to keep the OTDR transmit power constant. However, this step alone might not be enough to reach a sufficient accuracy of the measurement.

The transmit power might still change due to e.g. ageing. According to a further embodiment, the method comprises compensating an optical time domain reflectometry measurement, based on the estimated transmit power corresponding to the test sequence. A post-compensation is then justified where we the true OTDR transmit power is estimated, based on formula (1) or (2) or both. If both are used the $Tx_{TS}$ might be estimated by e.g. the maximum likelihood method. The OTDR measurement can then be corrected with the estimated OTDR.

Since one of the causes of a changing transmit power, is a fluctuating temperature, the method may further comprise monitoring a temperature while generating the optical transmission signal, and determining, based on the monitored temperature, when a compensation should be carried out. This way a compensation of the ODTR measurement can be carried out, when a temperature change has been detected.

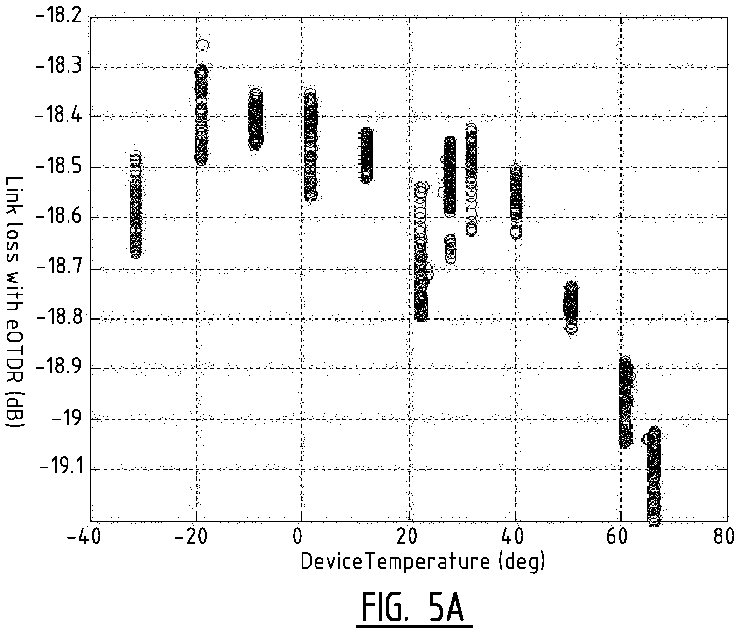

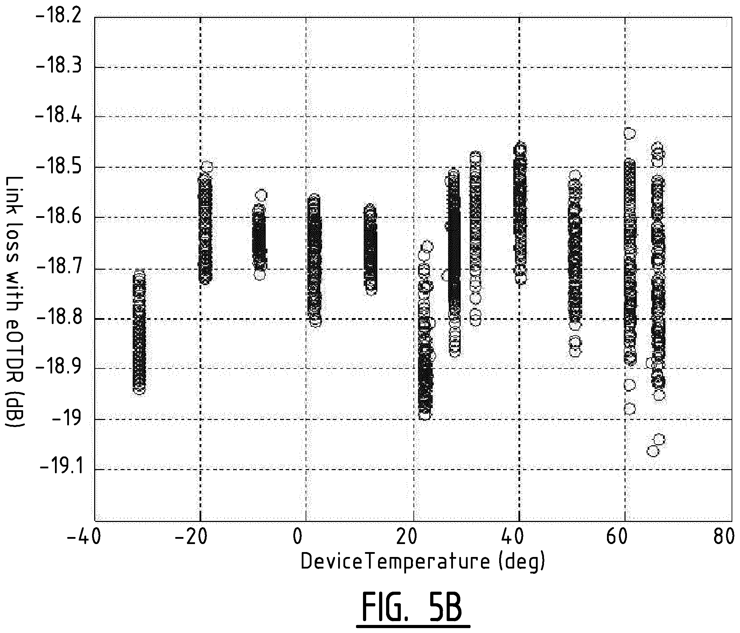

Finally, figure 5 illustrates two link loss measurements, of a given optical link, with embedded OTDR and reflector, over a wide temperature range. Without compensating the transmit power corresponding to the test sequence, for fluctuations due to temperature changes and/or ageing, the peak to peak variation is around 1dB (link loss measured to be -18.7 dB with a fixed source and precise power meter)(A). By using formula (1) to (post-)compensate these values, the peak to peak variation has dropped to around 0.7 dB (B). It is to be expected that additional pre-compensation and post-compensation based on formula (2) will further improve these measurements.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the figures, including any functional blocks labelled as "units", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "unit" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Whilst the principles of the invention have been set out above in connection with specific embodiments, it is to be understood that this description is merely made by way of example and not as a limitation of the scope of protection, which is determined by the appended claims.

## Claims

1. An optical data transmission device (100) for use in optical time domain reflectometry measurements in an optical access network, said device comprising:

    - a test sequence generating unit (110), configured for generating a test sequence that is to be transmitted in the optical access network, together with a data sequence;
    - a laser unit (120) configured for generating, in a first mode, an optical transmission signal comprising the data sequence and the test sequence; wherein
    - the laser unit is further configured for generating, in a second mode, an optical transmission signal comprising the data sequence and not comprising the test sequence; wherein the optical data transmission device further comprises
    - a monitoring unit (130) configured for monitoring a transmit power of the laser unit in the first mode wherein the test sequence is comprised in the optical transmission signal, and in the second mode wherein the test sequence is not comprised in the optical transmission signal; **characterized in that** the optical data transmission device further comprises
    - an estimating unit (140) configured for estimating from the transmit power of the laser unit, a transmit power corresponding to the test sequence; wherein
    - the estimating unit (140) is further configured for estimating the laser unit transmit power corresponding to the test sequence, based on said monitored transmit power of the laser unit in the first mode and the second mode.

2. The optical data transmission device (100) according to claim 1, wherein the estimating unit (140) is configured for estimating the transmit power corresponding to the test sequence, based on following formula:

$$Tx_{Tot,TS\ On} - Tx_{Tot,TS\ Off} = \frac{Tx_{TS}}{2};$$

wherein
$Tx_{Tot,\ TS\ On}$ is the laser unit transmit power in the first mode, $Tx_{Tot,\ TS,\ Off}$ is the laser unit transmit power in the second mode and $Tx_{TS}$ is the laser unit transmit power, corresponding to the test sequence.

**3.** The optical data transmission device (100) according to any one of the claims 1 and 2, further comprising an obtaining unit (150), configured for obtaining a test sequence modulation current and a data sequence modulation current; and wherein the estimating unit (140) is further configured for estimating the laser unit transmit power corresponding to the test sequence, based om said obtained test sequence modulation current and said obtained data sequence modulation current.

**4.** The optical data transmission device (100) according to claim 3, wherein the estimating unit (140) is configured for estimating the laser unit transmit power corresponding to the test sequence, based on following formula:

$$\frac{I_{mod,TS}}{I_{mod,DS}} \cdot Tx_{Tot,TS\,Off} \approx \frac{Tx_{TS}}{2};$$

wherein

$I_{mod,\,TS}$ is the test sequence modulation current, $I_{mod,\,DS}$ is the data sequence modulation current, $Tx_{Tot,\,TS,\,Off}$ is the laser unit transmit power in the second mode and $Tx_{TS}$ is the laser unit transmit power, corresponding to the test sequence.

**5.** The optical data transmission device (100) according to any one of the claims 3-4, further comprising a controlling unit (160), configured for controlling the test sequence modulation current in order to keep a ratio, between the test sequence modulation current and the data sequence modulation current of the data signal, within a predetermined range.

**6.** A method for performing an optical data transmission, for use in optical time domain reflectometry measurements in an optical access network, said method comprising:

- generating a test sequence (210) that is to be transmitted in the optical access network, together with a data sequence;
- generating, in a first mode, an optical transmission signal comprising the data sequence and the test sequence (222);
- generating, in a second mode, an optical transmission signal comprising the data sequence and not comprising the test sequence (221);
- monitoring a transmit power (230) of the optical transmission signal in the first mode wherein the test sequence is comprised in the optical transmission signal, and in the second mode, wherein the test sequence is not comprised in the optical transmission signal; **characterized by**
- estimating (240) from the transmit power of the optical transmission signal, a transmit power corresponding to the test sequence; and by
- estimating (240) the transmit power of the optical transmission signal corresponding to the test sequence, based on said monitored transmit power of the optical transmission signal in the first mode and the second mode.

**7.** The method according to claim 6, further comprising estimating (240) the transmit power corresponding to the test sequence, based on following formula:

$$Tx_{Tot,TS\,On} - Tx_{Tot,TS\,Off} = \frac{Tx_{TS}}{2};$$

wherein

$Tx_{Tot,\,TS\,On}$ is the laser unit transmit power in the first mode, $Tx_{Tot,TS,\,Off}$ is the laser unit transmit power in the second mode and $Tx_{TS}$ is the laser unit transmit power, corresponding to the test sequence.

**8.** The method according to claim 6 or 7, further comprising obtaining a test sequence modulation current and a data sequence modulation current and wherein estimating the transmit power of the optical transmission signal corresponding to the test sequence, is based om said obtained test sequence modulation current and said obtained data sequence modulation current.

**9.** The method according to claim 8, further comprising estimating (240) the transmit power corresponding to the test sequence, based on following formula:

$$\frac{I_{mod,TS}}{I_{mod,DS}} \cdot Tx_{Tot,TS\,Off} \approx \frac{Tx_{TS}}{2};$$

wherein

$I_{mod,\,TS}$ is the test sequence modulation current, $I_{mod,\,DS}$ is the data sequence modulation current, $Tx_{Tot,\,TS,\,Off}$ is the laser unit transmit power in the second mode and $Tx_{TS}$ is the laser unit transmit power, corresponding to the test sequence.

10. The method according to any one of the claims 8 or 9, further comprising controlling the test sequence modulation current in order to keep a ratio, between the test sequence modulation current and the data sequence modulation current of the data signal, within a predetermined range.

11. The method according to claim 10, further comprising compensating an optical time domain reflectometry measurement, based on said ratio between the test sequence modulation current and the data sequence modulation current of the data signal.

12. The method according to any of the claims 6-11, further comprising compensating an optical time domain reflectometry measurement, based on said estimated transmit power corresponding to the test sequence.

13. The method according to claim 11 or 12, further comprising monitoring a temperature while generating the optical transmission signal, and determining, based on said monitored temperature, when a compensation should be carried out.

## Patentansprüche

1. Optisches Datenübertragungsgerät (100) zum Gebrauch in Reflektometriemessungen in optischen Zeitdomänen in einem optischen Zugangsnetzwerk, wobei besagtes Gerät umfasst:

   - eine eine Testsequenz erzeugende Einheit (110), die konfiguriert ist zum Erzeugen einer Testsequenz, die in dem optischen Zugangsnetzwerk übertragen werden muss, zusammen mit einer Datensequenz;
   - eine Lasereinheit (120), die konfiguriert ist zum Erzeugen, in einem ersten Modus, eines optischen Übertragungssignals, umfassend die Datensequenz und die Testsequenz; wobei
   - die Lasereinheit weiterhin konfiguriert ist zum Erzeugen, in einem zweiten Modus, eines optischen Übertragungssignals, umfassend die Datensequenz und nicht die Testsequenz; wobei das optische Datenübertragungsgerät weiterhin umfasst
   - eine Überwachungseinheit (130), die konfiguriert ist zum Überwachen einer Sendeleistung der Lasereinheit in dem ersten Modus, wobei die Testsequenz in dem optischen Übertragungssignal umfasst ist, und im zweiten Modus, wobei die Testsequenz nicht in dem optischen Übertragungssignal umfasst ist; **dadurch gekennzeichnet, dass** das optische Datenübertragungsgerät weiterhin umfasst
   - eine Abschätzeinheit (140), die konfiguriert ist zum Abschätzen aus der Sendeleistung der Lasereinheit einer Sendeleistung, die der Testsequenz entspricht; wobei
   - die Abschätzeinheit (140) weiterhin konfiguriert ist zum Abschätzen der Sendeleistung der Lasereinheit, die der Testsequenz entspricht, auf Grundlage besagter überwachten Sendeleistung der Lasereinheit in dem ersten Modus und dem zweiten Modus.

2. Optisches Datenübertragungsgerät (100) nach Anspruch 1, wobei die Abschätzeinheit (140) konfiguriert ist zum Abschätzen der Sendeleistung, die der Testsequenz entspricht, auf Grundlage der folgenden Formel:

$$Tx_{Tot,TS\,On} - Tx_{Tot,TS\,Off} = \frac{Tx_{TS}}{2}$$

$$;$$

wobei

$Tx_{Tot,\,TS\,On}$ die Sendeleistung der Lasereinheit im ersten Modus, $Tx_{Tot,\,TS,\,Off}$ die Sendeleistung der Lasereinheit im zweiten Modus und $Tx_{TS}$ die Sendeleistung der Lasereinheit ist, die der Testsequenz entspricht.

3. Optisches Datenübertragungsgerät (100) nach einem beliebigen der Ansprüche 1 und 2, weiterhin umfassend eine Erhaltungseinheit (150), die konfiguriert ist zum Erhalten eines Testsequenz-Modulationsstroms und eines Datensequenz-Modulationsstroms; und wobei die Abschätzeinheit (140) weiterhin konfiguriert ist zum Abschätzen der Sendeleistung der Lasereinheit, die der Testsequenz entspricht, auf Grundlage besagten erhaltenen Testsequenz-Modulationsstroms und besagten erhaltenen Datensequenz-Modulationsstroms.

4. Optisches Datenübertragungsgerät (100) nach Anspruch 3, wobei die Abschätzeinheit (140) konfiguriert ist zum Abschätzen der Sendeleistung der Lasereinheit, die der Testsequenz entspricht, auf Grundlage der folgenden Formel:

$$\frac{I_{mod,TS}}{I_{mod,DS}} \cdot Tx_{Tot,TS\,Off} \approx \frac{Tx_{TS}}{2} ;$$

wobei
$I_{mod,TS}$ der Modulationsstrom der Testsequenz, $I_{mod,DS}$ der Modulationsstrom der Datensequenz, $Tx_{Tot,TS,Off}$ die Sendeleistung der Lasereinheit im zweiten Modus und $Tx_{TS}$ die Sendeleistung der Lasereinheit ist, die der Testsequenz entspricht.

5. Optisches Datenübertragungsgerät (100) nach einem beliebigen der Ansprüche 3-4, weiterhin umfassend eine Steuereinheit (160), die konfiguriert ist zum Steuern des Testsequenz-Modulationsstroms, um ein Verhältnis einzuhalten zwischen dem Testsequenz-Modulationsstrom und dem Datensequenz-Modulationsstrom des Datensignals innerhalb eines vorbestimmten Bereichs.

6. Verfahren zum Durchführen einer optischen Datenübertragung zum Gebrauch in Reflektometriemessungen in optischen Zeitdomänen in einem optischen Zugangsnetzwerk, wobei besagtes Verfahren umfasst:

- Erzeugen einer Testsequenz (210), die in dem optischen Zugangsnetzwerk übertragen werden muss, zusammen mit einer Datensequenz;
- Erzeugen, in einem ersten Modus, eines optischen Übertragungssignals, umfassend die Datensequenz und die Testsequenz (222);
- Erzeugen, in einem zweiten Modus, eines optischen Übertragungssignals, umfassend die Datensequenz und nicht die Testsequenz (221);
- Überwachen einer Sendeleistung (230) des optischen Übertragungssignals im ersten Modus, wobei die Testsequenz in dem optischen Übertragungssignal umfasst ist, und im zweiten Modus, wobei die Testsequenz nicht in dem optischen Übertragungssignal umfasst ist; **gekennzeichnet durch**
- Abschätzen (240) aus der Sendeleistung des optischen Übertragungssignals einer Sendeleistung, die der Testsequenz entspricht; und durch
- Abschätzen (240) der Sendeleistung des optischen Übertragungssignals, das der Testsequenz entspricht, auf Grundlage besagter überwachten Übertragungsleistung des optischen Übertragungssignals in dem ersten Modus und dem zweiten Modus.

7. Verfahren nach Anspruch 6, weiterhin umfassend das Abschätzen (240) der der Testsequenz entsprechenden Sendeleistung auf Grundlage der folgenden Formel:

$$Tx_{Tot,TS\,On} - Tx_{Tot,TS\,Off} = \frac{Tx_{TS}}{2} ;$$

wobei
$Tx_{Tot,TS\,On}$ die Sendeleistung der Lasereinheit im ersten Modus, $Tx_{Tot,TS,Off}$ die Sendeleistung der Lasereinheit im zweiten Modus und $Tx_{TS}$ die Sendeleistung der Lasereinheit ist, die der Testsequenz entspricht.

8. Verfahren nach Anspruch 6 oder 7, weiterhin umfassend das Erhalten eines Testsequenz-Modulationsstroms und eines Datensequenz-Modulationsstroms und wobei das Abschätzen der Sendeleistung des optischen Übertragungssignals, das der Testsequenz entspricht, basiert auf besagtem erhaltenen Testsequenz-Modulationsstrom und besagtem erhaltenen Datensequenz-Modulationsstrom.

9. Verfahren nach Anspruch 8, weiterhin umfassend das Abschätzen (240) der der Testsequenz entsprechenden Sendeleistung auf Grundlage der folgenden Formel:

$$\frac{I_{mod,TS}}{I_{mod,DS}} \cdot Tx_{Tot,TS\,Off} \approx \frac{Tx_{TS}}{2} \;;$$

wobei

$I_{mod,\,TS}$ der Modulationsstrom der Testsequenz, $I_{mod,\,DS}$ der Modulationsstrom der Datensequenz, $Tx_{Tot,\,TS,\,Off}$ die Sendeleistung der Lasereinheit im zweiten Modus und $Tx_{TS}$ die Sendeleistung der Lasereinheit ist, die der Testsequenz entspricht.

10. Verfahren nach einem beliebigen der Ansprüche 8 oder 9, weiterhin umfassend das Steuern des Testsequenz-Modulationsstroms, um ein Verhältnis einzuhalten zwischen dem Testsequenz-Modulationsstrom und dem Datensequenz-Modulationsstrom des Datensignals innerhalb eines vorbestimmten Bereichs.

11. Verfahren nach Anspruch 10, weiterhin umfassend das Kompensieren einer Reflektometriemessung einer optischen Zeitdomäne auf Grundlage besagten Verhältnisses zwischen dem Testsequenz-Modulationsstrom und dem Datensequenz-Modulationsstrom des Datensignals.

12. Verfahren nach einem beliebigen der Ansprüche 6-11, weiterhin umfassend das Kompensieren einer Reflektometriemessung einer optischen Zeitdomäne auf Grundlage besagter abgeschätzten Sendeleistung, die der Testsequenz entspricht.

13. Verfahren nach Anspruch 11 oder 12, weiterhin umfassend das Überwachen einer Temperatur, während das optischen Übertragungssignal erzeugt wird, und Bestimmen, auf Grundlage besagter überwachten Temperatur, wann eine Kompensierung durchführt werden sollte.

## Revendications

1. Dispositif d'émission de données optiques (100) à utiliser dans des mesures de réflectométrie optique temporelle dans un réseau d'accès optique, ledit dispositif comprenant :

- une unité de génération de séquence de test (110), conçue pour générer une séquence de test qui doit être transmise dans le réseau d'accès optique, avec une séquence de données ;
- une unité laser (120) conçue pour générer, dans un premier mode, un signal d'émission optique comprenant la séquence de données et la séquence de test ; dans lequel
- l'unité laser est en outre conçue pour générer, dans un second mode, un signal d'émission optique comprenant la séquence de données et ne comprenant pas la séquence de test ; le dispositif d'émission de données optiques comprenant en outre
- une unité de surveillance (130) conçue pour surveiller une puissance d'émission de l'unité laser dans le premier mode dans lequel la séquence de test est contenue dans le signal d'émission optique, et dans le second mode dans lequel la séquence de test n'est pas contenue dans le signal d'émission optique ; **caractérisé en ce que** le dispositif d'émission de données optiques comprend en outre
- une unité d'estimation (140) conçue pour estimer à partir de la puissance d'émission de l'unité laser, une puissance d'émission correspondant à la séquence de test ; où
- l'unité d'estimation (140) est en outre conçue pour estimer la puissance d'émission de l'unité laser correspondant à la séquence de test, en fonction de ladite puissance d'émission surveillée de l'unité laser dans le premier mode et le second mode.

2. Dispositif d'émission de données optiques (100) selon la revendication 1, dans lequel l'unité d'estimation (140) est conçue pour estimer la puissance d'émission correspondant à la séquence de test, en fonction de la formule suivante :

$$Tx_{Tot,TS\ On} - Tx_{Tot,TS\ Off} = \frac{Tx_{TS}}{2} \quad ;$$

dans laquelle
$Tx_{Tot,\ TS\ On}$ est la puissance d'émission de l'unité laser dans le premier mode, $Tx_{Tot,\ TS,\ Off}$ est la puissance d'émission de l'unité laser dans le second mode et $Tx_{TS}$ est la puissance d'émission de l'unité laser, correspondant à la séquence de test.

3. Dispositif d'émission de données optiques (100) selon l'une quelconque des revendications 1 et 2, comprenant en outre une unité d'obtention (150), conçue pour obtenir un courant de modulation de séquence de test et un courant de modulation de séquence de données ; et l'unité d'estimation (140) étant en outre conçue pour estimer la puissance d'émission de l'unité laser correspondant à la séquence de test, en fonction dudit courant de modulation de séquence de test obtenu et dudit courant de modulation de séquence de données obtenu.

4. Dispositif d'émission de données optiques (100) selon la revendication 3, dans lequel l'unité d'estimation (140) est conçue pour estimer la puissance d'émission de l'unité laser correspondant à la séquence de test, en fonction de la formule suivante :

$$\frac{I_{mod,TS}}{I_{mod,DS}} \cdot Tx_{Tot,TS\ Off} \approx \frac{Tx_{TS}}{2} \quad ;$$

dans laquelle
$I_{mod,\ TS}$ est le courant de modulation de séquence de test, $I_{mod,\ DS}$ est le courant de modulation de sequence de données, $Tx_{Tot,\ TS,\ Off}$ est la puissance d'émission de l'unité laser dans le second mode et $Tx_{TS}$ est la puissance d'émission de l'unité laser, correspondant à la séquence de test.

5. Dispositif d'émission de données optiques (100) selon l'une quelconque des revendications 3 et 4, comprenant en outre une unité de régulation (160), configurée pour réguler le courant de modulation de séquence de test afin de maintenir un rapport, entre le courant de modulation de séquence de test et le courant de modulation de séquence de données du signal de données, dans une plage prédéterminée.

6. Procédé d'exécution d'une émission de données optiques, à utiliser dans des mesures de réflectométrie optique temporelle dans un réseau d'accès optique, ledit procédé comprenant les étapes suivantes :

- générer une séquence de test (210) qui doit être transmise dans le réseau d'accès optique, avec une séquence de données ;
- générer, dans un premier mode, un signal d'émission optique comprenant la séquence de données et la séquence de test (222) ;
- générer, dans un second mode, un signal d'émission optique comprenant la séquence de données et ne comprenant pas la séquence de test (221) ;
- surveiller une puissance d'émission (230) du signal d'émission optique dans le premier mode dans lequel la séquence de test est contenue dans le signal d'émission optique, et dans le second mode dans lequel la séquence de test n'est pas contenue dans le signal d'émission optique ; **caractérisé par les étapes suivantes**
- estimer (240) à partir de la puissance d'émission du signal d'émission optique, une puissance d'émission correspondant à la séquence de test ; et
- estimer (240) la puissance d'émission du signal d'émission optique correspondant à la séquence de test, en fonction de ladite puissance d'émission surveillée du signal d'émission optique dans le premier mode et le second mode.

7. Procédé selon la revendication 6, comprenant en outre l'estimation (240) de la puissance d'émission correspondant à la séquence de test, en fonction de la formule suivante :

$$Tx_{Tot,TS\ On} - Tx_{Tot,TS\ Off} = \frac{Tx_{TS}}{2} \quad ;$$

dans laquelle

Tx$_{Tot, TS On}$ est la puissance d'émission de l'unité laser dans le premier mode, Tx$_{Tot, TS, Off}$ est la puissance d'émission de l'unité laser dans le second mode et Tx$_{TS}$ est la puissance d'émission de l'unité laser, correspondant à la séquence de test.

8. Procédé selon la revendication 6 ou 7, comprenant en outre l'obtention d'un courant de modulation de séquence de test et d'un courant de modulation de séquence de données et dans lequel l'estimation de la puissance d'émission du signal d'émission optique correspondant à la séquence de test, est basée sur ledit courant de modulation de séquence de test obtenu et sur ledit courant de modulation de séquence de données obtenu.

9. Procédé selon la revendication 8, comprenant en outre l'estimation (240) de la puissance d'émission correspondant à la séquence de test, en fonction de la formule suivante :

$$\frac{I_{mod,TS}}{I_{mod,DS}} \cdot Tx_{Tot,TS\,Off} \approx \frac{Tx_{TS}}{2} \;;$$

dans laquelle

I$_{mod, TS}$ est le courant de modulation de séquence de test, I$_{mod, DS}$ est le courant de modulation de séquence de données, Tx$_{Tot, TS, Off}$ est la puissance d'émission de l'unité laser dans le second mode et Tx$_{TS}$ est la puissance d'émission de l'unité laser, correspondant à la séquence de test.

10. Procédé selon l'une quelconque des revendications 8 et 9, comprenant en outre la régulation du courant de modulation de séquence de test afin de maintenir un rapport, entre le courant de modulation de séquence de test et le courant de modulation de séquence de données du signal de données, dans une plage prédéterminée.

11. Procédé selon la revendication 10, comprenant en outre la compensation d'une mesure de réflectométrie optique temporelle, en fonction dudit rapport entre le courant de modulation de séquence de test et le courant de modulation de séquence de données du signal de données.

12. Procédé selon l'une quelconque des revendications 6 à 11, comprenant en outre la compensation d'une mesure de réflectométrie optique temporelle, en fonction de ladite puissance d'émission estimée correspondant à la séquence de test.

13. Procédé selon la revendication 11 ou 12, comprenant en outre la surveillance d'une température tout en générant le signal d'émission optique, et la détermination, en fonction de ladite température surveillée, du moment où une compensation doit être réalisée.

FIG. 1

generating test
sequence ⟋ 210

generating optical
transmission signal ⟋ 220

221 ⟍
transmission signal
comprises data sequence

222 ⟋
transmission signal
comprises data sequence
and test sequence

monitoring transmit power of
optical transmission signal ⟋ 230

estimating transmit power
corresponding to test sequence

⟋ 240

## FIG. 2

FIG. 3

**FIG. 4**

pre-compensation

$$\frac{I_{mod,TS}}{I_{mod,DS}} = constant$$

SFP parameters and measurements

$I_{mod,DS}$

$I_{mod,TS}$

$Tx_{Tot}$

OTDR measurement

post-compensation

$Tx_{TS}$ estimation

Compensated OTDR measurement

FIG. 5A

EP 2 983 310 B1

FIG. 5B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1884758 A1
- US 8417114 B1
- WO 2005104315 A1
- EP 2670068 A